# EUROPEAN PATENT APPLICATION

(11) **EP 1 498 655 A2**
(43) Date of publication of application: **19.01.2005**
(21) Application number: 03025786.9
(22) Date of filing: 11.11.2003
(51) Int. Cl.: F21V 19/00, F21V 23/02, H05B 41/00

(54) **One-to-many compact fluorescent lamp holder structure**

(30) Priority: 16.07.2003 CN 03146477
(71) Applicant: SHANGHAI VIVA ECO ELECTRONICS & TECHNOLOGY CO., LTD., Pudong, Shanghai, 201203 (CN)
(72) Inventor: Chen, Chun Tsun, Longdong Avenue, Pudong, Shanghai 201203 (CN)
(74) Representative: Grünecker, Kinkeldey, Stockmair & Schwanhäusser Anwaltssozietät

(57) **Abstract**

A one-to-many compact fluorescent lamp holder structure includes a plurality of sockets (30), each of which is adapted to receive a compact fluorescent lamp; a ballast mechanism (10) containing a ballast circuit therein; and a plurality of electric wires (40) for electrically connecting the sockets (30) to the ballast circuit, so that compact fluorescent lamps mounted in the sockets will be turned on when an AC power is provided to the ballast circuit.

## Description

### Field of the Invention

The present invention is related to a compact fluorescent lamp holder, and in particular to a one-to-many compact fluorescent lamp holder containing an electronic ballast circuit for many compact fluorescent lamp sockets.

### Background of the Invention

In US patent publication No. 2002-0093279A1 this inventor discloses a lamp holder includes, a hollow main body; a ballast circuit disposed in said hollow main body; a socket for holding a compact fluorescent lamp on to said hollow main body; and a fastening mechanism for non-electrically fastening said hollow main body to a lighting fixture, wall, or ceiling, wherein said ballast circuit is electrically connected with electrodes of said compact fluorescent lamp when said compact fluorescent lamp is held on by said socket. This prior art lamp holder can facilitate the installation of a lamp socket together with a ballast circuit to a lighting fixture, wall, or ceiling. The disclosure of which is incorporated herein by reference.

For certain lighting applications more tha one compact fluorescent lamps are installed on a same object, for examples a light chandelier and a ceiling fan lighting fixture, or more tha one compact fluorescent lamps are mounted adjacently in a limited area, for example in the bathing room. Up to present, one compact fluorescent lamp is installed on one lamp holder/ballast. As a result, more space is needed for the installation of these lamp holders/ballasts, which is also relatively costive.

### Summary of the Invention

A primary objective of the present invention is to provide a one-to-many compact fluorescent lamp holder which is free of the prior art drawbacks.

Another objective of the present invention is to provide a one-to-many compact fluorescent lamp holder which is more energy conservative.

In order to accomplished the objectives of the present invention a one-to-many compact fluorescent lamp holder constructed according to the present invention comprises:
a plurality of sockets, each of which is adapted to receive a compact fluorescent lamp;
a ballast mechanism comprising a ballast circuit therein; and
a plurality of electric wires for electrically connecting the sockets to the ballast circuit, so that compact fluorescent lamps mounted in the sockets will be turned on when an AC power is provided to the ballast circuit.

Preferably, said ballast mechanism comprises a shell for accommodating said ballast circuit therein, said shell comprising a fastening mechanism for non-electrically fastening said shell to a lighting fixture, wall, or ceiling.

Preferably, said sockets and said ballast mechanism are separate. Alternatively, said sockets and said ballast mechanism are integral.

Preferably, said shell is a flat hollow cylinder or polygonal hollow body, and said fastening mechanism comprises a mounting hole at a center thereof or a plurality of locating slots at an edge thereof.

Preferably, said ballast circuit comprises an EMI circuit, a rectifying and filter circuit, an inverter circuit, and an output circuit, wherein said EMI circuit is adapted to be connected with an AC power, said rectifying and filter circuit is connected to said EMI circuit and provides a DC current to said inverter circuit, and said inverter circuit and said output circuit provide a high voltage for activating said compact fluorescent lamps and a high frequency AC current to said compact fluorescent lamps for maintaining their stable lighting.

### Brief Description of the Drawings

Fig. 1a is a perspective view of a one-to-many compact fluorescent lamp holder of the present invention suitable for use in a ceiling fan lighting fixture.
Fig. 1b is a perspective view showing a reverse side of the lamp holder in Fig. 1a.
Fig. 2a is a perspective view of a one-to-many compact fluorescent lamp holder of the present invention suitable for use in a bathroom.
Fig. 2b is a perspective view showing a reverse side of the lamp holder in Fig. 2a.
Fig. 3 is a circuit diagram of a ballast circuit suitable for use in the present invention.

### Legends

10..ballast 20..hollow cylindrical shell
20'..flat hollow rectangular body 21..central mounting hole
22..locating slot 23..power-in hole
30.. socket 31..opening 40..electric wire

### Detailed Description of the Invention

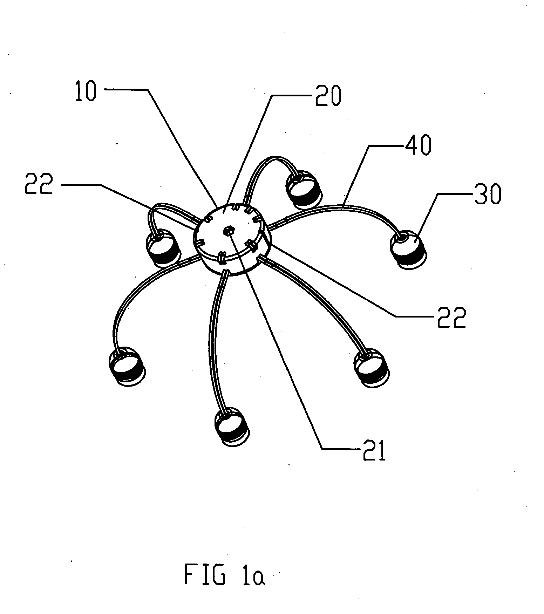

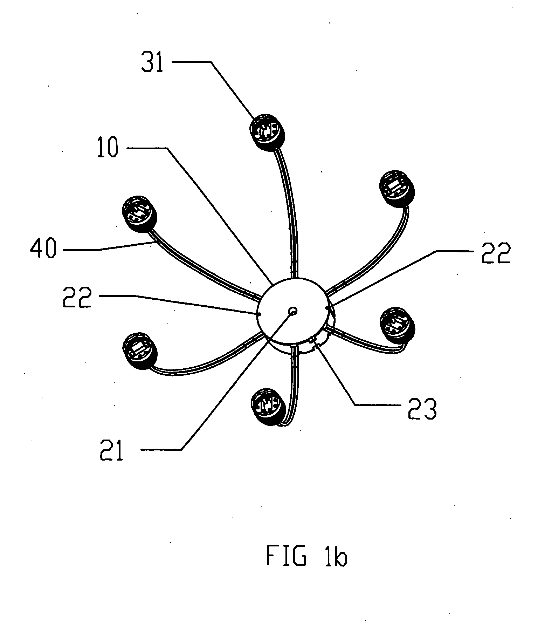

As shown in Figs. 1a and 1b, a one-to-many compact fluorescent lamp holder constructed according to a first embodiment of the present invention is suitable for use in a ceiling fan lighting fixture, which includes a ballast 10 composed of a hollow cylindrical shell 20 and a ballast circuit (not shown in the drawings) provided in the shell 20; six sockets 30; and six electric wires 40 connecting said six sockets 30 with said ballast 10. Said socket 30 has an opening 31 in which a compact fluorescent lamp is plugged in. Thanks to the electrodes provided inside said opening 31 and said electric wire 40, said compact fluorescent lamp plugged in said opening 31 is electrically connected to said ballast circuit in said shell 20. As a result, six compact fluorescent lamps plugged in said six sockets 30 will be turned on, when an AC power is provided to said ballast circuit in said shell 20. Said shell 20 has two opposite locating slots 22 at its edge and a central mounting hole 21. Said ballast 10 can be disposed and fastened to a plane by threading screws (not shown in the drawings) into said central mounting hole 21 and/or said locating slots 22. Said ballast 10 is further provided with a power-in hole 23 on said shell 20, in which a power wire can be plugged so that the ballast circuit in the shell 20 is powdered.

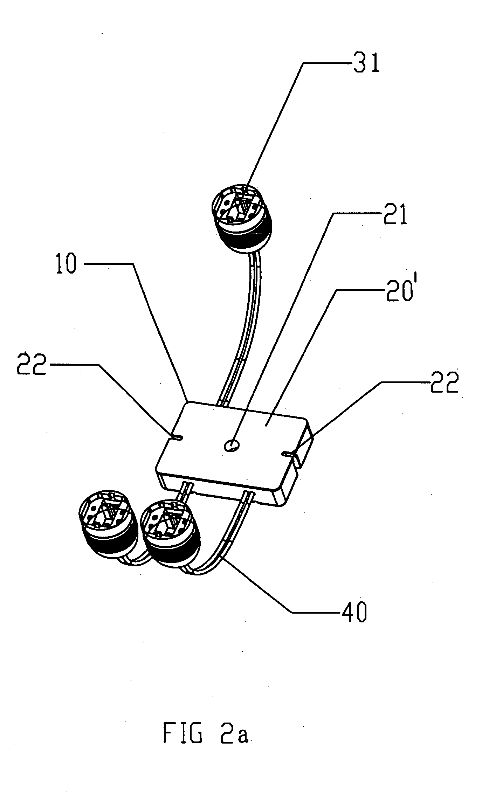

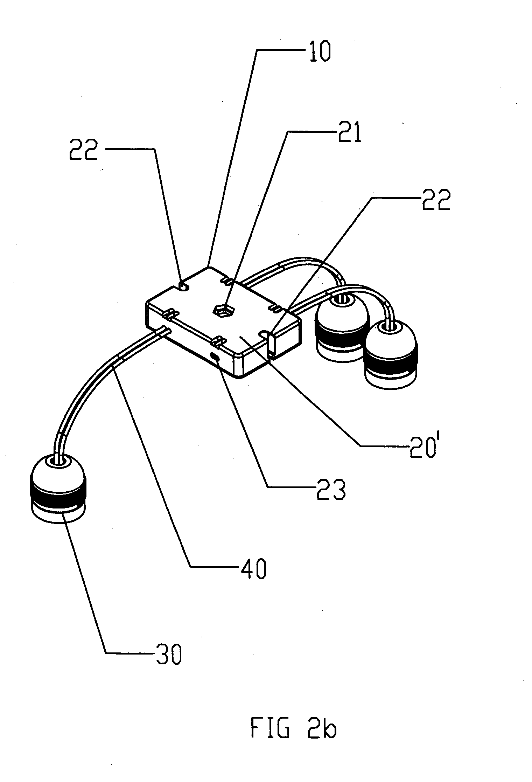

The one-to-many compact fluorescent lamp holder constructed according to another embodiment of the present invention is shown in Figs. 2a and 2b, which comprises a ballast 10 composed of a flat hollow rectangular body 20' and a ballast circuit (not shown in the drawings) provided in the rectangular body 20'; three sockets 30; and three electric wires 40 connecting said three sockets 30 with said ballast 10. The lamp holder of the embodiment shown in Figs. 2a and 2b is similar to the lamp holder shown in Figs. 1a and 1b with the difference in the number of the sockets and wires, and the shape of the ballast 10, wherein like elements are represented by like numerals. Said rectangular body 20' has two opposite locating slots 22 at two sides and a central mounting hole 21. Said ballast 10 can be disposed and fastened to a ceiling or wall by threading screws (not shown in the drawings) into said central mounting hole 21 and/or said locating slots 22.

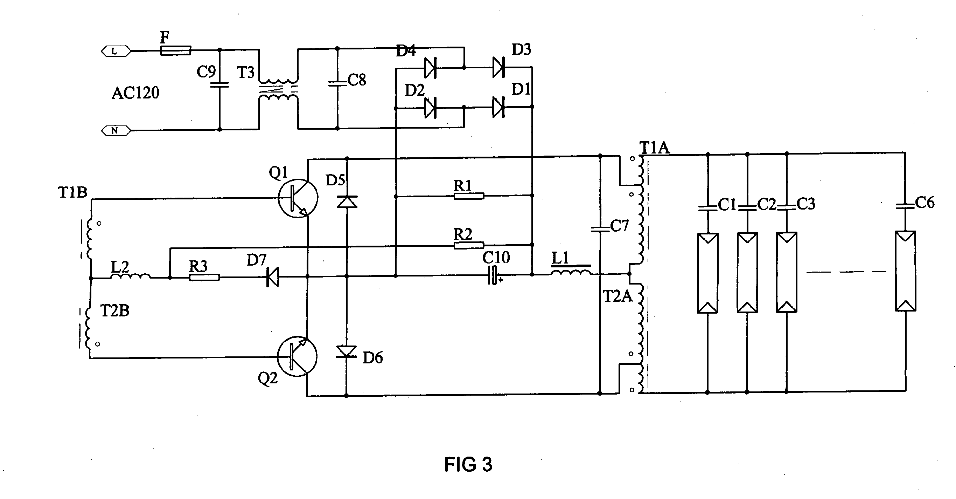

A ballast circuit suitable for use in the present invention is shown in Fig.3, wherein an AC power is supplied through a fuse F. A filtered DC voltage is supplied via an EMI circuit and a full bridge rectifier/filter circuit to an inverter circuit, in which a high voltage is generated by the self-coupling transformer coils (T1A and T2A) and output capacitors (C1-C6) to activate the compact fluorescent lamps. Said EMI circuit includes C9, T3 and C8. Said full bridge rectifier/filter circuit includes D1-D4, R1 and C10. Said inverter circuit mainly includes Q1, Q2, C7, T1A and T2A, in which an initiating circuit is composed of R2, R3, D7 and L2. T1B and T2B are feedback coils for supplying a sufficient driving current to Q1 and Q2. The output circuit (T1A, T2A, and C1-C6) will generate a high frequency of 25KHz.

## Claims

1. A one-to-many compact fluorescent lamp holder comprising:
a plurality of sockets, each of which is adapted to receive a compact fluorescent lamp;
a ballast mechanism comprising a ballast circuit therein; and
a plurality of electric wires for electrically connecting the sockets to the ballast circuit, so that compact fluorescent lamps mounted in the sockets will be turned on when an AC power is provided to the ballast circuit.

2. The lamp holder according to claim 1, wherein said ballast mechanism comprises a shell for accommodating said ballast circuit therein, said shell comprising a fastening mechanism for non-electrically fastening said shell to a lighting fixture, wall, or ceiling.

3. The lamp holder according to claim 1, wherein said sockets and said ballast mechanism are separate.

4. The lamp holder according to claim 1, wherein said sockets and said ballast mechanism are integral.

5. The lamp holder according to claim 2, wherein said shell is a flat hollow cylinder or polygonal hollow body, and said fastening mechanism comprises a mounting hole at a center thereof or a plurality of locating slots at an edge thereof.

6. The lamp holder according to claim 1, wherein said ballast circuit comprises an EMI circuit, a rectifying and filter circuit, an inverter circuit, and an output circuit, wherein said EMI circuit is adapted to be connected with an AC power, said rectifying and filter circuit is connected to said EMI circuit and provides a DC current to said inverter circuit, and said inverter circuit and said output circuit provide a high voltage for activating said compact fluorescent lamps and a high frequency AC current to said compact fluorescent lamps for maintaining their stable lighting.
